(19)

Europäisches
Patentamt
European
Patent Office
Office européen
des brevets

(11) **EP 4 300 523 A1**

(12) **EUROPEAN PATENT APPLICATION**
published in accordance with Art. 153(4) EPC

(43) Date of publication:
**03.01.2024 Bulletin 2024/01**

(21) Application number: **22759728.3**

(22) Date of filing: **24.02.2022**

(51) International Patent Classification (IPC):
**H01G 9/12** (2006.01)   **H01G 2/10** (2006.01)
**H01M 50/147** (2021.01)   **H01M 50/342** (2021.01)

(52) Cooperative Patent Classification (CPC):
**H01G 2/10; H01G 9/12; H01M 50/147;
H01M 50/342**

(86) International application number:
**PCT/JP2022/007622**

(87) International publication number:
**WO 2022/181693 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.02.2021 JP 2021029362**

(71) Applicant: **Nippon Chemi-Con Corporation
Tokyo 141-8605 (JP)**

(72) Inventors:
• **YASUDA, Ryoichi
Tokyo 141-8605 (JP)**

• **HONDA, Ikufumi
Tokyo 141-8605 (JP)**
• **KOGA, Atsushi
Tokyo 141-8605 (JP)**
• **KOMATSU, Hiroshi
Tokyo 141-8605 (JP)**
• **TSUMEDA, Satoru
Tokyo 141-8605 (JP)**
• **WATANABE, Shin
Tokyo 141-8605 (JP)**

(74) Representative: **Mewburn Ellis LLP
Aurora Building
Counterslip
Bristol BS1 6BX (GB)**

(54) **VALVE STRUCTURE, OPENING-SEALING MEMBER, POWER STORAGE DEVICE, AND
MANUFACTURING METHOD THEREFOR**

(57)    Included are: a cylindrical body (cylindrical portion 16) provided with a shaft portion (18); and a first valve body (11) that is in close contact with the shaft portion to close an opening portion (22) of the cylindrical body, and is separated from the shaft portion when pressure (P) in the cylindrical body rises to a threshold (Pth) or higher by gas that has entered the cylindrical body, to release the gas from the cylindrical body to the outside. The valve body includes a closing portion (40) that receives the pressure (P) of the gas in the cylindrical body. The pressure received by the closing portion (40) serves as a valve opening force. As a result, the discharge characteristics of the gas filling a case are improved to enhance a pressure regulation function.

EP 4 300 523 A1

# FIG.1

## Description

Technical Field

The present disclosure relates to a pressure regulation technique represented by an opening-sealing member or the like for releasing gas generated through operation of a power storage device or the like to the outside of its case for pressure regulation.

Background Art

In a power storage device such as an electrolytic capacitor, gas such as hydrogen gas is generated from an electrolytic solution through its operation, and its case is filled with the gas to increase internal pressure. A pressure release valve that discharges the gas to the outside of the case to regulate the pressure in order to suppress the internal pressure to a threshold or lower, and an explosion-proof valve that suppresses destruction due to a rapid increase in the internal pressure are provided. The pressure release valve and the explosion-proof valve are installed in an opening-sealing member that closes the case.

Regarding the pressure release valve, a structure is known in which a shaft portion is provided in a pressure release port opened in an opening-sealing plate, a valve main body is provided to the shaft portion, an extension spring that presses the valve main body against the shaft portion is provided, and the valve is opened when pressure exceeds a predetermined value (for example, Patent Literature 1).

Regarding the pressure release valve, a structure is known in which a resin housing is provided in an opening portion of a laminate film, the resin housing and a valve body made of an elastic body are provided, and the valve is opened when pressure in the laminate film exceeds a predetermined value (for example, Patent Literature 2).

Furthermore, regarding the pressure release valve, a structure is known in which a valve main body made of an elastic body is provided in a pressure release port provided on an opening-sealing plate, a valve shaft functioning as a valve seat for the valve main body is provided, an annular spring is provided around the valve main body, and the valve is opened when pressure exceeds a predetermined value (for example, Patent Literature 3).

Then, regarding the explosion-proof valve, one is known in which a valve main body made from a cylindrical body is attached in a mounting hole having a different diameter, which is formed on an opening-sealing plate, a thin portion is provided to the valve main body, and the thin portion is ruptured when pressure in a case rises to exceed allowable pressure to realize an explosion-proof function (for example, Patent Literature 4).

Citation List

Patent Literature

Patent Literature 1: WO2003/044397
Patent Literature 2: JP 2010-56507 A
Patent Literature 3: JP 2005-123423 A
Patent Literature 4: JP 62-58035 U

Summary of Invention

Technical Problem

By the way, when pressure in a case exceeds allowable pressure, opening a valve to release gas is advantageous in protecting a mounted instrument from rupture of a device and the like. However, there are disadvantages such as it is difficult to continuously use the device described above after the valve is opened, and scattering of an electrolytic solution from the inside of the device.

On the other hand, a pressure release valve that discharges gas to the outside of a case in accordance with an increase in the pressure in the case can discharge the gas when the pressure in the case exceeds predetermined pressure, and can adjust the pressure in the case to constant pressure.

While the gas in the case can be discharged by a pressure regulation function of a pressure regulation valve, the life and the operation characteristics of the device are however affected. Improvement of the characteristics has thus been required.

The inventor et al. have found that improvement in a structure for avoiding evaporation and outflow of a drive liquid such as an electrolytic solution that is present in a device and for realizing an exhaust function is advantageous in suppressing deterioration of the characteristics of the device and in enhancing the pressure regulation function of the device.

Therefore, an object of the present disclosure is to improve the discharge characteristics for gas filling a case to enhance a pressure regulation function based on the problems and findings described above.

Solution to Problem

In order to achieve the above object, according to one aspect of a valve structure of the present disclosure, the valve structure includes: a cylindrical body provided with a shaft portion; and a first valve body that is in close contact with the shaft portion to close an opening portion of the cylindrical body, and is separated from the shaft portion when pressure in the cylindrical body rises to a threshold or higher by gas that has entered the cylindrical body, to release the gas from the cylindrical body to outside.

In this valve structure, the first valve body includes a closing portion that receives the pressure of the gas in the cylindrical body, and the pressure received by the closing portion serves as a valve opening force for the first valve body.

In this valve structure, the first valve body includes a closing piece that is in contact with a peripheral surface of the shaft portion, is deformed by the pressure in the cylindrical body, and is separated from the shaft portion, and the closing piece is in a state where the closing piece is pressed by the shaft portion that is in contact with the closing piece.

In this valve structure, the closing piece is in contact with the shaft portion and elastically deformed in a gas discharge direction.

In this valve structure, an inclined surface portion is provided on either the peripheral surface, on a tip side, of the shaft portion or a part of the closing piece, and the closing piece and the shaft portion are in contact with the inclined surface portion or an edge portion at an end portion of the inclined surface portion.

In this valve structure, between the first valve body and the shaft portion, one surface portion or its corner portion is in contact with either the inclined surface portion or the edge portion.

In this valve structure, the threshold for the pressure at which the closing piece deforms is set by one value or both values of a protrusion length of the shaft portion from the opening portion and an inclination angle of the inclined surface portion.

In this valve structure, the first valve body includes a cylindrical portion that covers a part or a whole of the peripheral surface of the shaft portion together with the closing portion, and the closing portion and the cylindrical portion are separated from the shaft portion depending on a state of the pressure in the cylindrical body to release the gas to outside.

In this valve structure, a ventilation portion that allows the gas to flow is provided on either or both of the shaft portion and the first valve body in at least a joint range between the shaft portion and the first valve body.

In this valve structure, either or both of the shaft portion and the first valve body include a concave portion or a convex portion in at least a joint range between the shaft portion and the first valve body.

In this valve structure, a second valve body including a gas-liquid separation portion on the cylindrical body, the gas-liquid separation portion being configured to separate moisture from the gas is provided.

In order to achieve the above object, according to one aspect of an opening-sealing member of the present disclosure, the opening-sealing member for closing an outer case of a power storage device includes: a cylindrical body installed in an opening portion of the opening-sealing member and provided with a shaft portion; and a first valve body that is in close contact with the shaft portion to close an opening portion of the cylindrical body, and is separated from the shaft portion when pressure in the cylindrical body rises to a threshold or higher by gas that has entered the cylindrical body, to release the gas from the cylindrical body to outside.

In order to achieve the above object, according to one aspect of a power storage device of the present disclosure, the power storage device includes the valve structure or the opening-sealing member.

In order to achieve the above object, according to one aspect of an opening-sealing member manufacturing method of the present disclosure, the method includes: forming an opening portion in an opening-sealing member; forming a cylindrical body provided with a shaft portion; installing, on the cylindrical body, a first valve body that is in close contact with the shaft portion to close an opening portion of the cylindrical body; and fixing the cylindrical body and the first valve body between a step portion in the opening portion of the opening-sealing member and an elastic fixing member fixed to the opening portion.

In order to achieve the above object, according to one aspect of a power storage device manufacturing method of the present disclosure, the method includes: forming an opening-sealing member including an opening portion; forming a cylindrical body provided with a shaft portion; installing, on the cylindrical body, a first valve body that is in close contact with the shaft portion to close an opening portion of the cylindrical body; and fixing the cylindrical body and the first valve body between a step portion in the opening portion of the opening-sealing member and an elastic fixing member fixed to the opening portion.

Advantageous Effects of Invention

According to the present disclosure, any one of the following effects can be obtained.

(1) When the pressure in the cylindrical body increases to the threshold or higher due to the gas, the first valve body can be separated from the shaft portion to release the gas from the cylindrical body, and an excellent pressure regulation function can be realized.

(2) It is possible to achieve the pressure regulation function in the joint range between the first valve body and the shaft portion, to achieve function sharing between fixing of the cylindrical body provided with the shaft portion and the first valve body and the pressure regulation function, and to enhance a setting function for and reliability of the pressure regulation function.

(3) As long as the first valve body is not damaged, the pressure regulation function can be continuously maintained while repeating the pressure regulation operation, and the life of the opening-sealing member or the power storage device can be extended.

Then, other objects, features, and advantages of the present invention will become more apparent by referring to the accompanying drawings and embodiments.

Brief Description of Drawings

Fig. 1 is an exploded cross-sectional view illustrating an opening-sealing member and a valve structure according to a first embodiment.

Fig. 2 is a cross-sectional view illustrating the opening-sealing member and the valve structure installed in a power storage device.

Fig. 3 is a view illustrating a pressure regulation function of the opening-sealing member installed in the power storage device.

Fig. 4A is a cross-sectional view illustrating a first valve body according to Example 1, Fig. 4B is a cross-sectional view illustrating a seal guide, and Fig. 4C is a cross-sectional view illustrating the seal guide and the first valve body.

Fig. 5A is a cross-sectional view illustrating a seal guide according to Example 2, Fig. 5B is a cross-sectional view illustrating the seal guide and a first valve body, and Fig. 5C is a cross-sectional view illustrating the seal guide and the first valve body.

Fig. 6A is a cross-sectional view illustrating a first valve body according to Example 3, and Fig. 6B is a cross-sectional view illustrating a seal guide and the first valve body combined with each other.

Fig. 7 is a cross-sectional view illustrating an opening-sealing member and a valve structure according to a second embodiment.

Fig. 8A is a cross-sectional view illustrating a first valve body, Fig. 8B is a cross-sectional view illustrating a seal guide, and Fig. 8C is a view illustrating an assembled state of the first valve body and the seal guide.

Fig. 9 is a view illustrating a pressure regulation function of the opening-sealing member installed in a power storage device.

Mode(s) for Carrying out the Invention

[First Embodiment]

<Exploded Cross Section of Opening-sealing Member 2>

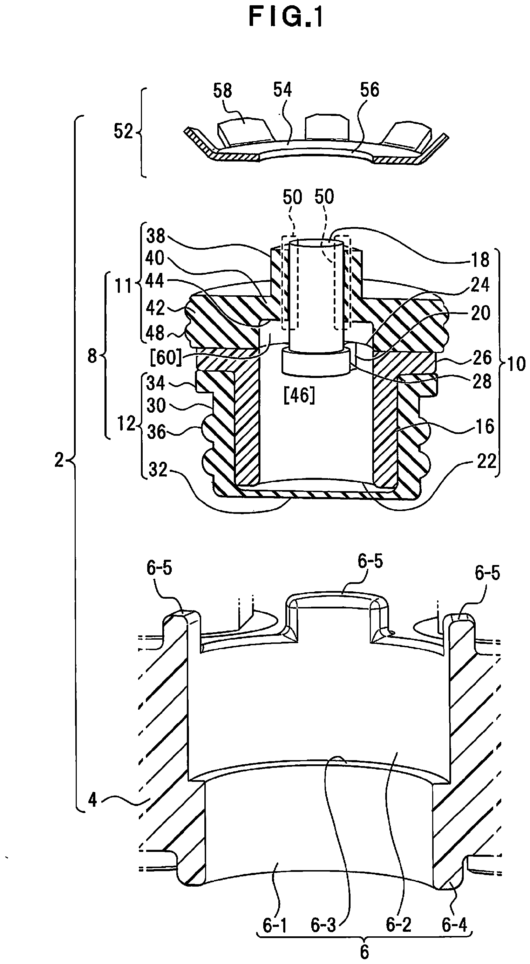

Fig. 1 illustrates an exploded cross section of an opening-sealing member 2 according to a first embodiment. A configuration illustrated in Fig. 1 is an example, and the present disclosure is not limited to such a configuration.

The opening-sealing member 2 is, for example, installed in an opening portion of a device case of a power storage device to close the device case, and has a pressure regulation function for the device case. With this pressure regulation function, gas filling the device case is discharged to pressure-regulate internal pressure in the device case to a threshold or lower. The power storage device is an example of an electronic component having a power storage function such as an electrolytic capacitor. The device case is, for example, a case member that encapsulates an element such as a capacitor element, and is formed of aluminum, synthetic resin, or the like.

The opening-sealing member 2 is a lid member for sealing the device case, and includes an opening-sealing member main body 4 made of a synthetic resin alone or a laminate of rubber and a synthetic resin. An opening portion 6 is a through hole for attaching a valve unit 8, and is also a through hole for allowing the valve unit 8 to release the gas in the device case. The opening portion 6 includes a small diameter portion 6-1, a large diameter portion 6-2, a step portion 6-3, and vertical wall portions 6-4 and 6-5.

The small diameter portion 6-1 is an opening having an identical diameter and opened toward the inside of the device case. The large diameter portion 6-2 is an opening having an identical diameter and opened toward the inside of the device case, and is larger in diameter than the small diameter portion 6-1. Therefore, the step portion 6-3 is formed by a difference in diameter between the large diameter portion 6-2 and the small diameter portion 6-1, and is a flat surface portion facing the outside of the device case. The vertical wall portion 6-4 is an annular wall portion extending from the small diameter portion 6-1 and protruding into the device case. The vertical wall portion 6-5 includes a plurality of protruding portions extending from the large diameter portion 6-2 and protruding toward the outside of the device case.

The valve unit 8 includes a seal guide 10 for realizing the pressure regulation function, a first valve body 11 (hereinafter simply referred to as the valve body 11), and a second valve body 12 (hereinafter simply referred to as the valve body 12).

The seal guide 10 is, for example, a molded body of hard synthetic resin. The seal guide 10 may be configured as an individual component independent of the valve bodies 11 and 12, or may be a single component integrally molded with the valve bodies 11 and 12. The seal guide 10 integrally includes a cylindrical portion 16, a shaft portion 18, and a support portion 20. The cylindrical portion 16 is an example of a cylindrical body according to the present disclosure. The cylindrical portion 16 has an opening portion 22 on a side of the valve body 12 and another opening portion 24 on a side of the valve body 11, and a flange portion 26 is formed on a side of the opening portion 24. The flange portion 26 is placed on the step portion 6-3 in the opening portion 6 of the opening-sealing member main body 4.

The shaft portion 18 is, for example, a columnar body having an identical diameter and erected on the side of the opening portion 24, and includes a large diameter portion 28 on a side of the cylindrical portion 16. The support portion 20 is formed between the large diameter portion 28 and the cylindrical portion 16, and the shaft portion 18 is supported by the cylindrical portion 16 via the support portion 20. The shaft portion 18 constitutes a valve seat portion with respect to the valve body 12. In the present embodiment, the shaft portion 18 is set higher than the valve body 11 in the drawing. However, the shaft portion 18 may be set lower than the valve body 11.

Then, in the seal guide 10, the cylindrical portion 16 is covered with the valve body 12, and the valve body 11 is installed on a side of the shaft portion 18. The valve body 12 is formed of a material having gas permeability and gas-liquid separability, for example, silicon. The valve body 11 is formed of a material having flexibility and airtightness such as butyl rubber. Therefore, the valve body 12 mainly realizes a gas-liquid separation function, and the valve body 11 mainly realizes the pressure regulation function.

The valve body 11 includes a cylindrical portion 38, a closing portion 40, a flange portion 42, and a concave portion 44. The cylindrical portion 38 has a smaller diameter than an outer diameter of the shaft portion 18 of the seal guide 10, and covers an outer surface portion of the shaft portion 18 by the flexibility of the cylindrical portion 38.

The closing portion 40 closes the opening portion 24 of the seal guide 10 together with the cylindrical portion 38 and the flange portion 42, and forms a closed space portion 46 in the cylindrical portion 16. In order to bring the flange portion 42 into close contact with an inner wall portion of the opening portion 6, the flange portion 42 is formed thicker than the closing portion 40 and larger in diameter than the flange portion 26 of the seal guide 10, and is placed on the flange portion 26. The concave portion 44 is formed by the closing portion 40 and the flange portion 42, and forms a space portion 60 extending from the cylindrical portion 16 and having an identical diameter.

Annular convex portions 48 are formed around the flange portion 42 and are in close contact with an inner wall surface of the large diameter portion 6-2 of the opening portion 6. A joint range 50 is a joint area between the shaft portion 18 and the cylindrical portion 38 and the closing portion 40 of the valve body 11.

Therefore, regarding the function of each part in the valve body 11, the cylindrical portion 38 and the closing portion 40 constitute, as a valve function portion, a movable range realizing a valve function, the joint range 50 realizes a valve function together with the shaft portion 18, and the flange portion 42 constitutes a fixed range. The cylindrical portion 38 and the closing portion 40 constitute a pressure receiving range that receives pressure P in the cylindrical portion 16, and the pressure P equal to or higher than a threshold Pth acts as a valve opening force that separates the cylindrical portion 38 from the shaft portion 18.

The valve body 12 includes a cylindrical portion 30, a gas-liquid separation portion 32, and a flange portion 34. The cylindrical portion 30 covers the cylindrical portion 16 of the seal guide 10, and a plurality of annular convex portions 36 formed on an outer peripheral portion of the cylindrical portion 30 are in close contact with the inner wall portion of the opening portion 6 to seal the opening portion 6.

The gas-liquid separation portion 32 closes an opening of the cylindrical portion 16 of the seal guide 10, removes a liquid component from gas G, and guides only a gas component into the cylindrical portion 16.

Therefore, regarding the function of each part in the valve body 12, the gas-liquid separation portion 32 is a valve function range, and the cylindrical portion 30 and the flange portion 34 constitute a fixed range.

A clip plate 52 is an example of an elastic fixing member that fixes the valve unit 8 inserted into the opening portion 6 of the opening-sealing member main body 4 to the opening-sealing member main body 4, and is formed of a metal plate or the like having high rigidity. The clip plate 52 includes an annular main body portion 54 to be stacked on the flange portion 42 of the valve body 11, and a through hole 56 is formed at its center. The shaft portion 18 and the cylindrical portion 38 of the valve body 11 pass through the through hole 56, and the closing portion 40 is exposed through the through hole 56. A plurality of locking claws 58 are formed integrally with the main body portion 54 on a peripheral edge of the main body portion 54.

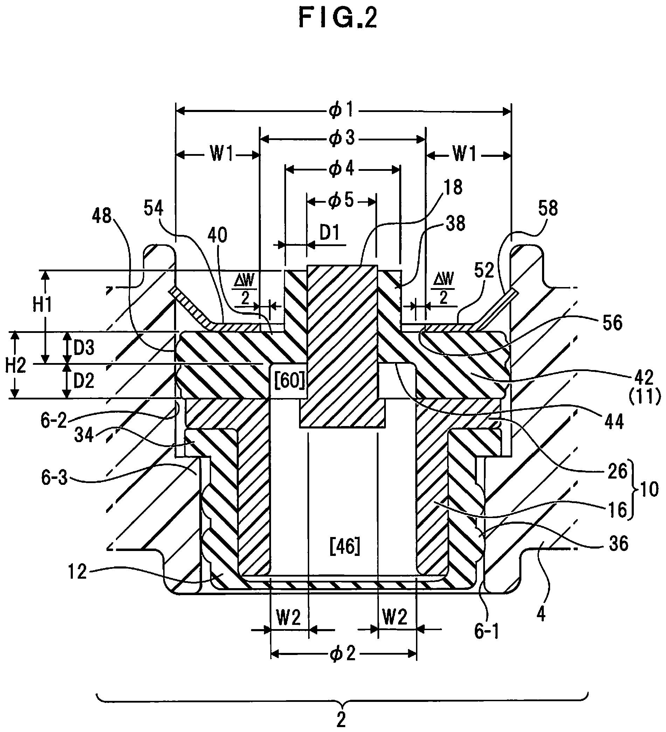

As illustrated in Fig. 2, with the flange portion 34 of the valve body 12 disposed on a lower surface side and the flange portion 42 of the valve body 11 disposed on an upper surface side of the flange portion 26 of the seal guide 10, the valve unit 8 is installed on the step portion 6-3 of the opening-sealing member main body 4. Then, the main body portion 54 of the clip plate 52 is stacked on an outer surface portion of the flange portion 42 of the valve body 11, and the valve unit 8 is firmly fixed to the opening-sealing member 2 by locking the locking claws 58 to an inner wall of the opening portion 6 of the opening-sealing member 2 in a compressed state. At this time, the annular convex portions 36 on the outer periphery of the cylindrical portion 30 of the valve body 12 are in close contact with the small diameter portion 6-1 of the opening portion 6 of the opening-sealing member 2 in a compressed state, and seal a side of the small diameter portion 6-1. Furthermore, in the large diameter portion 6-2 of the opening portion 6 of the opening-sealing member 2, the annular convex portions 48 on an outer periphery of the flange portion 42 of the valve body 11 are in close contact with an inner wall of the large diameter portion 6-2 in a compressed state, and seal a side of the large diameter portion 6-2.

<Pressure Regulation Structure of Valve Unit 8>

Fig. 2 illustrates a cross section of the opening-sealing member 2 and the valve structure installed in the power storage device. In Fig. 2, portions identical to those in Fig. 1 are denoted by identical reference numerals.

Symbols provided in Fig. 2 and respective contents are as follows.

$\varphi1$: Diameter of the flange portion 42 of the valve body 11 (= inner diameter of the large diameter portion 6-2 in the opening portion 6 of the opening-sealing member 2)

$\varphi2$: Inner diameter of the cylindrical portion 16 (= inner diameter of the concave portion 44)

$\varphi3$: Inner diameter of the through hole 56 of the clip plate 52

$\varphi4$: Diameter of the cylindrical portion 38

$\varphi5$: Diameter of the shaft portion 18

H1: Height of the cylindrical portion 38

H2: Height of the flange portion 42

W1: Width of the flange portion 42

W2: Width of the closing portion 40

$\Delta W$: Inner diameter difference between the through hole 56 of the clip plate 52 and the cylindrical portion 16

$\Delta W/2$: Clearance between the through hole 56 of the clip plate 52 and the cylindrical portion 16

D1: Thickness of the cylindrical portion 38

D2: Depth of the concave portion 44

D3: Thickness of the closing portion 40

Using these symbols, a pressure receiving area S1 of the closing portion 40, a contact area S2 (a size of the joint range 50) between the shaft portion 18 and the cylindrical portion 38, the height H2 of the flange portion 42, and an exposed area S3 of the valve body 11 from the clip plate 52 are as follows.

1) Pressure receiving area S1 of the closing portion 40

In the valve unit 8, a space portion is formed by the space portion 60 of the concave portion 44 having an identical diameter to that of the space portion 46 of the cylindrical portion 16. Assuming that the pressure P acts on the concave portion 44, the pressure receiving area S1 of the closing portion 40 is given by Equation (1).

$$S1 = \pi \cdot \{(\varphi2/2)2 - (\varphi5/2)2\} \quad \cdots(1)$$

2) Contact area S2 (the size of the joint range 50) between the shaft portion 18 and the cylindrical portion 38

The contact area S2 between the cylindrical portion 38 and the shaft portion 18 is given by Equation (2).

$$S2 = \pi \cdot (\varphi 5) \times H1 \qquad \cdots (2)$$

The contact area S2 represents the size of the joint range 50.
The width W1 of the flange portion 42 is given by Equation (3).

$$W1 = (\varphi 1 - \varphi 2)/2 \qquad \cdots (3)$$

The width W2 of the closing portion 40 is given by Equation (4).

$$W2 = (\varphi 2 - \varphi 5)/2 \qquad \cdots (4)$$

3) Height H2 of the flange portion 42

The height H2 of the flange portion 42 is given by Equation (5).

$$H2 = D2 + D3 \qquad \cdots (5)$$

When D2 ≈ D3, Equation (5) is as follows.

$$D2 \approx D3 = H2 \div 2 \qquad \cdots (6)$$

An outline volume V of the flange portion 42 is given by Equation (7).

$$V = \pi \cdot \{ (\varphi 1/2)2 - (\varphi 2/2)2 \} \times H2 \quad \cdots (7)$$

4) Exposed area S3 of the valve body 11 from the clip plate 52

The exposed area S3 of the closing portion 40 from the through hole 56 of the clip plate 52 is given by Equation (8).

$$S3 = \pi \cdot \{ (\varphi 3/2)2 - \pi \cdot (\varphi 4/2)2 \} \quad \cdots (8)$$

5) Inner diameter difference ΔW between the through hole 56 of the clip plate 52 and the cylindrical portion 16

The inner diameter difference ΔW between the through hole 56 of the clip plate 52 and the cylindrical portion 16 is given by Equation (9).

$$\Delta W = \varphi 3 - \varphi 2 \qquad \cdots (9)$$

When the inner diameter difference ΔW is set to ΔW ≥ 0 and the centers of inner diameters of the through hole 56 and the cylindrical portion 16 are set to be common to each other, the clearance ΔW/2 ≥ 0 can be set between the inner diameter φ3 of the through hole 56 of the clip plate 52 and the inner diameter φ2 of the cylindrical portion 16.
In the valve unit 8, since the valve body 11 includes the flange portion 42 having the outline volume V, it is firmly fixed between the clip plate 52 and the step portion 6-3. The closing portion 40 and the cylindrical portion 38 constitute a free end and constitute a cantilever beam structure. Therefore, the pressure receiving area S1 of the closing portion 40 and the thickness D1 of the cylindrical portion 38 constitute a movable range of the valve body 11 that moves in accordance with the pressure P acting on the concave portion 44.

Then, with respect to the pressure P, the threshold Pth at which the valve body 11 opens is set by the rigidity of the closing portion 40 and the contact area S2 constituting the joint range 50.

<Pressure Regulation Function of Valve Unit 8>

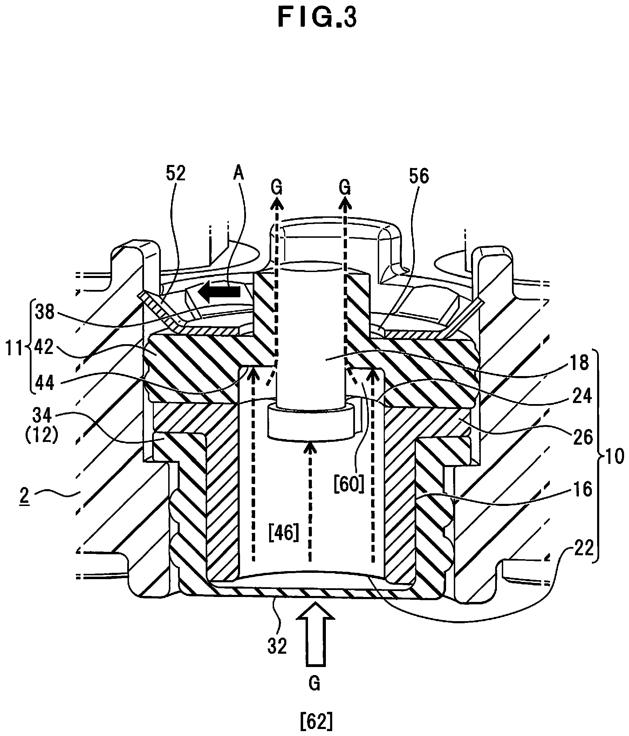

Fig. 3 illustrates the valve unit 8 and the pressure regulation function (discharge of the gas G when P > Pth).

The opening-sealing member 2 including the valve unit 8 is used for sealing the device case of the power storage device (not illustrated). The device case is filled with an electrolytic solution serving as a drive liquid and a capacitor element that generates gas such as hydrogen gas during driving. In Fig. 3, a space portion 62 represents a space in the case, and the space portion 62 is filled with the gas G serving as gas containing a liquid such as the electrolytic solution, vapor, and the like discharged from the element. The gas G increases the pressure in the device case.

For the gas G, a liquid such as the electrolytic solution and vapor are separated by the gas-liquid separation portion 32 of the valve body 12. Therefore, the gas G that has passed through the gas-liquid separation portion 32 reaches the space portion 46 on the side of the cylindrical portion 16, and increases the pressure in the space portion 46.

<Valve Closure Function of Valve Unit 8>

When the gas G moves from the space portion 62 to the space portion 46, and when the pressure P in the space portion 46 due to the gas G is lower than the threshold Pth that is set for the valve body 11, the cylindrical portion 38 of the valve body 11 is in close contact with the shaft portion 18, and then the valve unit 8 is in a valve closed state. That is, in Fig. 3, a state with neither a thick-line arrow nor broken-line arrows is maintained.

<Transition of Valve Unit 8 from Valve Closed State to Valve Opened State>

When the pressure P in the space portion 46 becomes equal to or higher than the threshold Pth that is set for the valve body 11, the cylindrical portion 38 of the valve body 11 moves in a direction indicated by an arrow A from the shaft portion 18 by the pressure P applied to the closing portion 40, and then the valve unit 8 is in a valve opened state. That is, a gas passage is formed between the shaft portion 18 and the cylindrical portion 38, and the gas G is discharged from the space portions 46 and 60 to the outside air as indicated by the broken-line arrows. The discharge of the gas G continues until the pressure P in the space portions 46 and 60 decreases to be lower than the threshold Pth.

<Return of Valve Unit 8 from Valve Opened State to Valve Closed State>

When the pressure P in the space portion 46 decreases to be lower than the threshold Pth that is set for the valve body 11, the cylindrical portion 38 of the valve body 11 returns to the side of the shaft portion 18 (a direction opposite to that the arrow A indicates) due to a shape restoring property that the valve body 11 has, and then the valve unit 8 is in a valve closed state. Therefore, the pressure P in the space portions 46 and 60 decreases to be lower than the threshold Pth, and the pressure P in the device case is pressure-regulated to be lower than the threshold Pth.

<Explosion-proof Function of Valve Unit 8>

An explosion-proof function is obtained by the pressure regulation function described above, and, for example, the valve body 11 cracks in accordance with an increase in pressure exceeding one that the pressure regulation function of the valve unit 8 permits, and the gas is instantaneously discharged in response to an increase in internal pressure to also realize the explosion-proof function.

<Manufacturing Process of Opening-sealing Member 2 Including Valve Unit 8>

A manufacturing process of the opening-sealing member 2 including the valve unit 8 includes a manufacturing process of the seal guide 10, the valve body 11, and the valve body 12 (S101), an assembling process of the valve unit 8 (S102), a processing process of the opening-sealing member 2 (S103), a manufacturing process of the clip plate 52 (S104), an installation process of the valve unit 8 (S105), a fixing process of the valve unit 8 (S106), and the like.

The manufacturing process of the seal guide 10, the valve body 11, and the valve body 12 (S101): The seal guide 10 is manufactured through molding using a hard synthetic resin. The valve body 12 is manufactured through molding using a material having gas-liquid separability such as silicon. The valve body 11 is manufactured through molding using a material having flexibility and airtightness such as butyl rubber.

The assembling process of the valve unit 8 (S102): The valve body 12 is covered over the cylindrical portion 16 of the seal guide 10, and the cylindrical portion 38 of the valve body 11 is covered over the shaft portion 18 to form the valve unit 8 including the valve body 12, the seal guide 10, and the valve body 11.

The processing process of the opening-sealing member 2 (S103): The opening portion 6 in which the valve unit 8 is to be installed is formed in the opening-sealing member 2.

The manufacturing process of the clip plate 52 (S104): The clip plate 52 to be engaged, in terms of diameter, with the large diameter portion 6-2 of the opening portion 6 is manufactured in advance.

The installation process of the valve unit 8 (S105): The side of the valve body 12 of the valve unit 8 is inserted in a compressed state from the side of the large diameter portion 6-2 of the opening portion 6 formed in the opening-sealing member 2. The flange portion 34 of the valve body 12 is installed on the step portion 6-3 in the opening portion 6, and the flange portion 42 of the valve body 11 is inserted into the side of the large diameter portion 6-2 in a compressed state.

The fixing process of the valve unit 8 (S106): The cylindrical portion 38 of the valve body 11, which is present on the side of the large diameter portion 6-2 of the opening portion 6, is inserted into the through hole 56 of the clip plate 52, and the main body portion 54 is stacked on an upper surface of the valve body 11 while sliding the locking claws 58 of the clip plate 52 on the wall surface of the large diameter portion 6-2 of the opening portion 6 in a compressed state in a direction toward the center. As a result, the clip plate 52 is fixed to the opening portion 6, and the valve unit 8 is also fixed to the opening-sealing member 2.

<Manufacturing Process of Power Storage Device>

A manufacturing process of the power storage device includes a manufacturing process of the opening-sealing member 2 (S201), a sealing process of the device case (S202), and the like.

The manufacturing process of the opening-sealing member 2 (S201): The opening-sealing member 2 including the valve unit 8 is manufactured. This manufacturing method is performed based on the manufacturing process described above.

The sealing process of the device case (S202): After an element is placed in the device case, the device case is sealed with the opening-sealing member 2 described above.

<Effects of First Embodiment>

According to the configuration described above, any one of those effects described below can be obtained.

(1) Pressure regulation by discharge of the gas G

When the case of the power storage device is filled with the gas G and the pressure P rises to the threshold Pth or higher, the gas G is discharged to the outside of the case by the pressure regulation function that the valve unit 8 has, and the pressure P can be pressure-regulated to be lower than the threshold Pth. With the pressure regulation function that the valve body 11 has, the gas can be discharged without allowing the valve body 11 to be destructed, and the life of the power storage device can be extended.

(2) Prevention of entry of foreign matters

In the valve unit 8, the valve body 12 having gas-liquid separability and the valve body 11 having the pressure regulation function are installed, and the valve body 11 is opened only by an increase in the pressure P on a side of the space portion 46. Therefore, it is possible to prevent foreign matters from entering from outside and to prevent the characteristics of the power storage device from being deteriorated due to the entry of foreign matters from outside.

(3) Independence between fixation and the pressure regulation function of the valve body 11

The valve body 11 is firmly fixed to the opening-sealing member 2 by causing the clip plate 52 to be in contact with a thick portion side of the flange portion 42, and the pressure regulation function of the valve body 11 is executed only by the elasticity that the closing portion 40 and the cylindrical portion 38 have. The clip plate 52 realizes only a function of fixing the valve body 11 to the flange portion 42. That is, the shaft portion 18 and the cylindrical portion 38 and the closing portion 40, which are the valve function portions of the valve body 11, are exposed from the through hole 56 of the clip plate 52, and the clip plate 52 does not affect the pressure regulation function of the valve body 11.

As described above, when the inner diameter difference $\Delta W$ between the through hole 56 of the clip plate 52 and the cylindrical portion 16 is set to $\Delta W \geq 0$ and the centers of the inner diameters of the through hole 56 and the cylindrical portion 16 are set to be common to each other, the clearance $\Delta W/2 \geq 0$ can be set between the inner diameter $\varphi 3$ of the through hole 56 of the clip plate 52 and the inner diameter $\varphi 2$ of the cylindrical portion 16. Therefore, the clip plate 52 does not prevent the valve body 11 from moving, and the pressure regulation function can be stably maintained. Therefore, pressure regulation responsiveness with respect to an increase in the pressure P can be enhanced, the pressure regulation function can be prevented from being deteriorated, and the reliability can be enhanced.

Furthermore, the main body portion 54 of the clip plate 52 is fixed to the opening-sealing member main body 4 while detouring the valve function portions of the valve body 11, and it is possible to prevent interference between the valve function and the fixing function of the valve body 11 by the clip plate 52.

(4) Movability of the cylindrical portion 38 of the valve body 11 and independence of the shaft portion 18 of the seal guide 10

The cylindrical portion 16 and the shaft portion 18 of the seal guide 10 are held between the step portion 6-3 in the opening portion 6 of the opening-sealing member 2 and the clip plate 52 together with the valve bodies 11 and 12, and are firmly fixed to the opening-sealing member 2. Therefore, even when the cylindrical portion 38 and the closing portion 40 of the valve body 11 move by the pressure P, the shaft portion 18 does not follow the movement, and when the pressure P rises to the threshold Pth or higher, a gas permeation passage can be created in the joint range 50 between the shaft portion 18 and the cylindrical portion 38. As a result, the gas G when the pressure P rises to the threshold Pth or higher can be efficiently released from the space portions 46 and 60 to the outside air.

(5) Setting of the threshold Pth by the cylindrical portion 38 and the closing portion 40 of the valve body 11

As described above, the cylindrical portion 38 and the closing portion 40 of the valve body 11 are integrated with the flange portion 42, and function sharing is achieved by the flange portion 42 for fixing the valve body 11 and by the cylindrical portion 38 and the closing portion 40 forming the movable range for pressure regulation. Therefore, the threshold Pth can be set in accordance with the shapes and thicknesses of the cylindrical portion 38 and the closing portion 40 of the valve body 11, the diameter of the shaft portion 18, the area of the joint range 50, and the like. That is, the threshold Pth can be easily set, based on the characteristics of the material of the valve body 11, to the desired threshold Pth.

(6) Pressure regulation function of the cylindrical portion 38 and the closing portion 40 of the valve body 11

Since the cylindrical portion 38 and the closing portion 40 of the valve body 11 are separated from the fixing function of the valve body 11, the cylindrical portion 38 and the closing portion 40 of the valve body 11 can be reduced in weight, the mobility can be increased, and the superior pressure regulation performance can be realized.

(7) Continuous use of the opening-sealing member 2

As long as the valve body 11 is not damaged, the pressure regulation function can be continuously maintained while repeating the pressure regulation operation, and the lives of the opening-sealing member 2 and the power storage device can be extended.

Note that, although the valve structure including the valve body 12, the valve unit 8, and the power storage device are described in the first embodiment, the valve structure, the valve unit 8, and the power storage device according to the present disclosure may have a configuration in which the valve body 12 is omitted.

Example 1

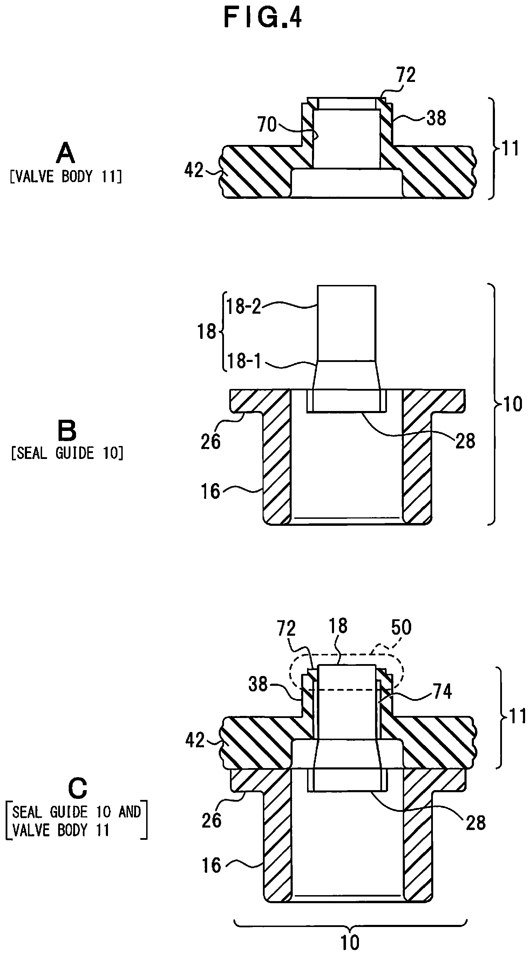

A of Fig. 4 illustrates a valve body 11 according to Example 1. Portions identical to those in Fig. 1 are denoted by identical reference numerals. In the valve body 11, an opening portion 70 of a cylindrical portion 38 is formed to be larger in diameter than a small diameter portion 72 formed on an upper opening side of the cylindrical portion 38.

B of Fig. 4 illustrates a seal guide 10 according to Example 1. Portions identical to those in Fig. 1 are denoted by identical reference numerals. In the seal guide 10, a conical portion 18-1 and an identical diameter portion 18-2 are formed in a shaft portion 18. The conical portion 18-1 is formed into a tapered shape having a large cylinder diameter on a side of a large diameter portion 28 and reaching the identical diameter portion 18-2. The identical diameter portion 18-2 is formed to be smaller in diameter than the opening portion 70 of the cylindrical portion 38 of the valve body 11.

When the valve body 11 is joined to the seal guide 10 as described above, a joint range 50 is configured by the shaft portion 18 and the small diameter portion 72 of the valve body 11, as illustrated in C of Fig. 4. A passage 74 is formed around the shaft portion 18. When the valve is opened, the passage 74 forms a ventilation passage.

<Effects of Example 1>

According to Example 1, any one of those effects described below can be obtained.

(1) Since the joint range 50 is reduced in area and the passage 74 is formed, the gas G can be easily discharged.
(2) Since the conical portion 18-1 is provided, the shaft portion 18 of the seal guide 10 can be reinforced.

Example 2

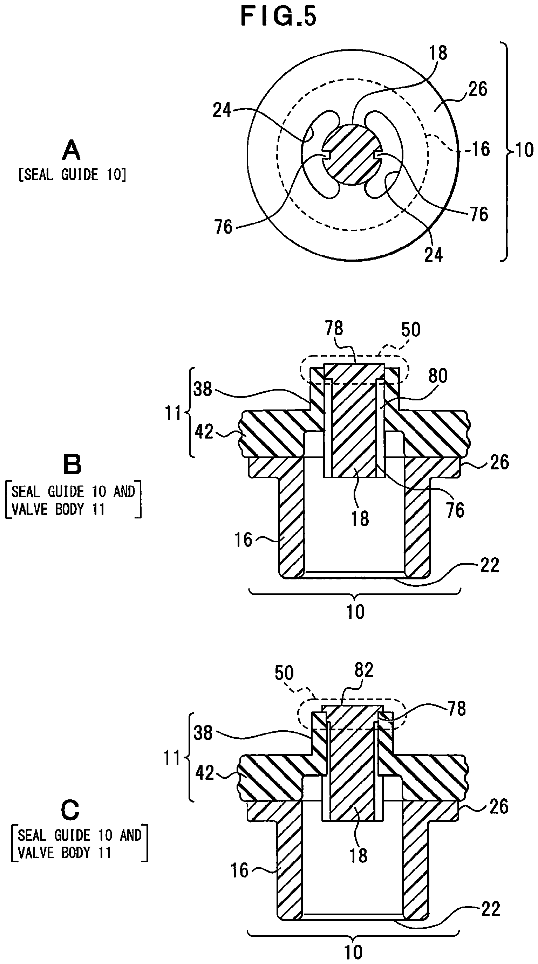

A of Fig. 5 illustrates a seal guide 10 according to Example 2. Portions identical to those in Fig. 1 are denoted by identical reference numerals. In the seal guide 10, a plurality of groove portions 76 are formed in a middle portion of a shaft portion 18. Opening portions 24 are formed around the shaft portion 18.
As illustrated in B of Fig. 5, an annular portion 78 without the groove portions 76 is formed in the shaft portion 18. When the valve body 11 illustrated in Fig. 1 is attached to the seal guide 10 as described above, a joint range 50 is formed by a cylindrical portion 38 of the valve body 11 and the annular portion 78 of the shaft portion 18. Then, the groove portions 76 form passages 80 around the shaft portion 18. When the valve is opened, the passages 80 form ventilation passages.
In Example 2, a flange portion 82 may be formed at a top portion of the shaft portion 18, and the flange portion 82 may be installed on a top portion of the cylindrical portion 38 of the valve body 11, as illustrated in C of Fig. 5.

<Effects of Example 2>

According to Example 2, any one of those effects described below can be obtained.

(1) Since the joint range 50 is reduced in area and the passages 80 are formed, the gas G can be easily discharged.
(2) When the joint range 50 is formed by the valve body 11 and the annular portion 78 and the flange portion 82 of the shaft portion 18, a contact area between the shaft portion 18 and the cylindrical portion 38 of the valve body 11 can be enlarged.

Example 3

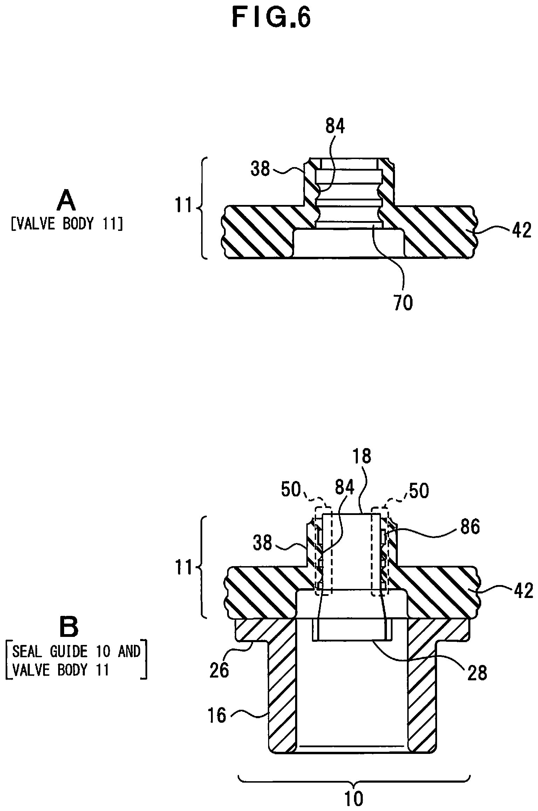

A of Fig. 6 illustrates a valve body 11 according to Example 3. Portions identical to those in Fig. 1 are denoted by identical reference numerals. In the valve body 11, an annular concave-and-convex portion 84 is formed inside an opening portion 70 of a cylindrical portion 38 as an example of a concave portion or a convex portion.
When the valve body 11 as described above is attached to the seal guide 10 illustrated in B of Fig. 4, a joint range 50 can be formed by a flat surface portion of a shaft portion 18 and the concave-and-convex portion 84 of the valve body 11, and a passage 86 is formed around the shaft portion 18, as illustrated in B of Fig. 6. When the valve is opened, the passage 86 forms a ventilation passage.

<Effects of Example 3>

According to Example 3, since the joint range 50 is reduced in area and the passage 86 is formed, the gas G can be easily discharged.

[Second Embodiment]

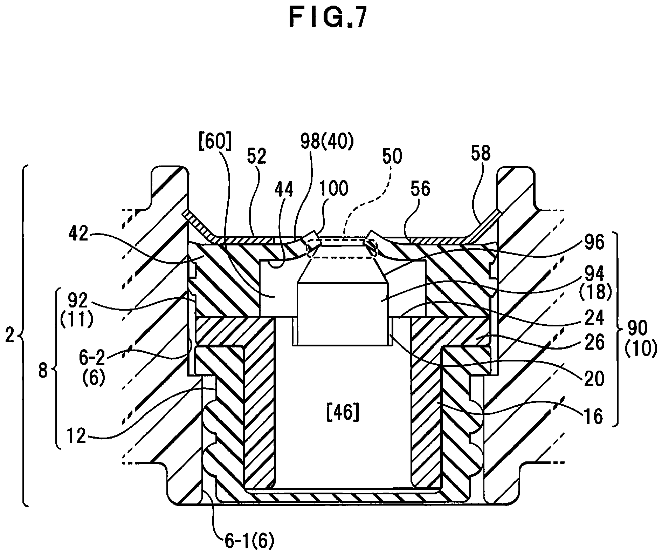

Fig. 7 illustrates an assembly cross section illustrating an opening-sealing member and a valve structure according to a second embodiment. A configuration illustrated in Fig. 7 is an example, and the present disclosure is not limited to such a configuration. Furthermore, in Fig. 7, portions identical to those in Figs. 1 and 2 are denoted by identical reference numerals.
A valve unit 8 described in the second embodiment is formed by sandwiching a seal guide 90 between a first valve body 92 (hereinafter simply referred to as the "valve body 92") and a valve body 12, and is fixed and held in an opening portion 6 of an opening-sealing member 2 by an elastic support force of a clip plate 52. For example, as illustrated in Fig. 7, the valve unit 8 closes an opening portion 24 of the seal guide 90 through press-fitting with respect to a tip portion of a shaft portion 94 of the seal guide 90 to cause the valve body 92 to be partially deformed, and forms a closed space portion 46 in a cylindrical portion 16.
The valve body 92 includes, for example, a flange portion 42, a concave portion 44, a closing piece 98, and an opening portion 100.

The closing piece 98 is an example of a closing portion 40 according to the present disclosure, forms the opening portion 100 of the valve body 92, and is a means that functions as a pressure regulation function of the opening-sealing member 2 that releases a closing state of the space portion 46 by being deformed in accordance with a pressure state of gas in the closed space portion 46. That is, the closing piece 98 constitutes a pressure receiving range that receives pressure P in the cylindrical portion 16, and the pressure P equal to or higher than the threshold Pth acts as a valve opening force for separation from the shaft portion 94.

The opening portion 100 is an example of a passage allowing the gas to be released to the outside through operation of the closing piece 98.

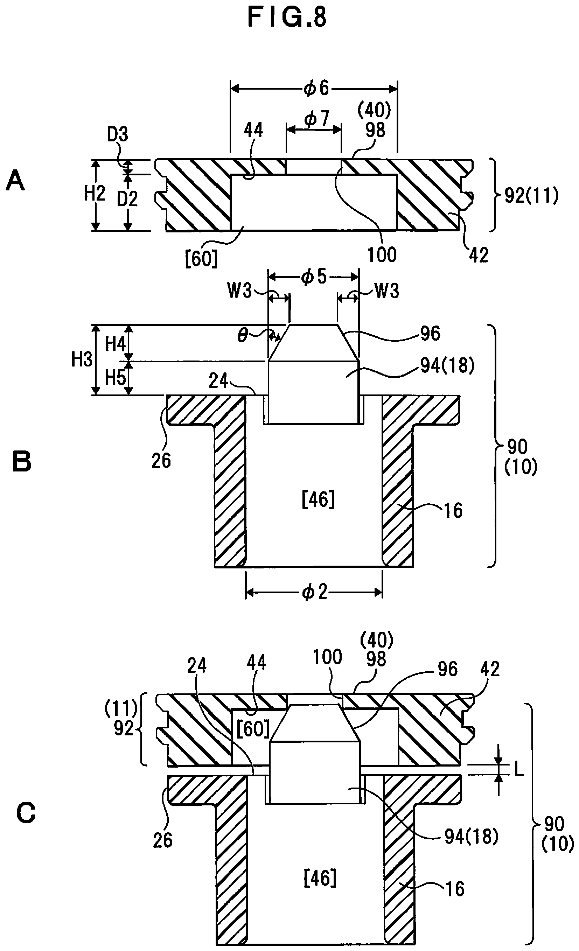

The shaft portion 94 is formed integrally with a support portion 20, for example, and includes an inclined surface portion 96 inclined with respect to its central axis on at least a part or a whole of a peripheral surface on a protruding tip side. The shaft portion 94 has, for example, a tapered shape where the tip side has an inclination angle θ (B of Fig. 8). The shaft portion 94 is formed such that the inclined surface portion 96 is in contact with a part of the valve body 92 when at least the flange portion 26 of the seal guide 90 and the flange portion 42 of the valve body 92 are in contact with each other. That is, a joint range 50 of the valve unit 8 is formed by a point or a surface at which the inclined surface portion 96 of the shaft portion 94 and the closing piece 98 of the valve body 92 are in contact with each other.

A of Fig. 8 illustrates a configuration of the valve body 92. B of Fig. 8 illustrates a configuration of the seal guide 90. C of Fig. 8 illustrates an assembled state of the valve body 92 and the seal guide 90.

The closing piece 98 of the valve body 92 forms a free end with respect to the opening portion 100, and has a so-called cantilever beam structure, as illustrated in A of Fig. 8, for example. A thickness D3 of the closing piece 98 is equal to or smaller than a depth D2 of the concave portion 44 of the valve body 92, for example. A value of the depth D2 may be set in accordance with the threshold Pth for the pressure P to be received, which is set as a valve function, or the closing piece 98 is made of a material having high rigidity, for example. An opening diameter φ7 of the opening portion 100 is smaller than a diameter φ6 of the concave portion 44 of the valve body 92 and smaller than a diameter φ5 of the shaft portion 94 of the seal guide 90.

In addition, the diameter φ6 of the concave portion 44 of the valve body 92 is formed to be equal to or larger than an inner diameter φ2 of the cylindrical portion 16 of the seal guide 90, for example. The diameter φ6 of the concave portion 44 may be set in accordance with, for example, the outer diameter φ5 of the shaft portion 94 or the threshold Pth for the pressure P to be received, which is set for the valve body 92.

In the seal guide 90, a protrusion length H3 of the shaft portion 94 protruding from the opening portion 24 is set to be greater than the depth D2 of the concave portion 44 of the valve body 92, as illustrated in B of Fig. 8, for example. As a result, when the seal guide 90 and the valve body 92 are joined to each other, the shaft portion 94 is brought into contact with the closing piece 98. The protrusion length H3 of the shaft portion 94 is an example of the parameters for adjusting the amount of deformation of the closing piece 98, for example. Furthermore, the amount of contact of the inclined surface portion 96 of the shaft portion 94 with the closing piece 98 can be adjusted by combining any one, two, or more of an inclination width W3, an inclination height H4, and the inclination angle θ. A position of contact of the closing piece 98 with respect to the inclined surface portion 96 is changed by this adjustment of the amount of contact, and the amount of deformation of the closing piece 98 can be adjusted. The inclination width W3, the inclination height H4, and the inclination angle θ are also parameters for adjusting the amount of deformation of the closing piece 98.

In the adjustment of the amount of contact, the inclination angle θ is set by setting the inclination height H4 to a constant value and changing the inclination width W3, for example. Conversely, the inclination angle θ is set by setting the inclination width W3 to a constant value and changing the inclination height H4. Alternatively, the inclination angle θ may be varied, and the inclination width W3 and the inclination height H4 may be set in accordance with the angle.

In such an adjustment of the amount of contact, those tendencies as described below are observed, for example.

(1) When the protrusion length H3 and the inclination height H4 of the shaft portion 94 are set to be constant and the inclination width W3 is increased, the inclination angle θ increases and the contact pressure between the inclined surface portion 96 and the closing piece 98 decreases. As a result, the threshold Pth for the closing portion 40 decreases. That is, the operation pressure of the valve body 92 tends to decrease.

(2) When the inclination width W3 and the inclination angle θ (the inclination height H4) are set to be constant and the protrusion length H3 of the shaft portion 94 is increased, the contact pressure between the inclined surface portion 96 and the closing piece 98 increases, and the closing piece 98 is greatly deformed. As the shaft portion 94 and the closing piece 98 are strongly in contact with each other in this manner, the threshold Pth for the closing portion 40 increases. That is, the operation pressure of the valve body 92 tends to increase.

Note that, here, the setting position of the inclination angle θ of the inclined surface portion 96 illustrated in B of Fig. 8 is an example, and the present disclosure is not limited to this example.

<Assembly of Valve Body 92 and Seal Guide 90>

Assembly processing of the valve body 92 and the seal guide 90 is an example of an opening-sealing member manufacturing method and a power storage device manufacturing method according to the present disclosure, and is included in, for example, the assembling process of the valve unit 8 (S102) and the manufacturing process of the opening-sealing member 2 (S201) described in the first embodiment.

In the assembly processing of the valve body 92 and the seal guide 90, the inclined surface portion 96 of the shaft portion 94 of the seal guide 90 is bought into contact with the opening portion 100 of the valve body 92 to set an arrangement position, as illustrated in C of Fig. 8, for example. At this time, a gap L determined by the protrusion length H3 of the shaft portion 94 and the depth D2 of the concave portion 44, for example, is created between the valve body 92 and the seal guide 90. The amount of deformation of the closing piece 98 is proportional to the gap L.

Then, by pressing and joining either or both of the valve body 92 and the seal guide 90 in directions opposite to each other, a part of the inclined surface portion 96 enters the opening portion 100, and, accordingly, the closing piece 98 is bent and deformed in an outward direction of the valve unit 8, that is, in the gas discharge direction. At this time, the closing piece 98 is pressed in an outward direction of the valve body 92, that is, in the gas discharge direction through contacting with the shaft portion 94. The closing piece 98 at this time is in an elastically deformed state, and a restoring force is exerted in a direction of returning to a state before contacting with the shaft portion 94.

<Functional Operation of Valve Unit 8>

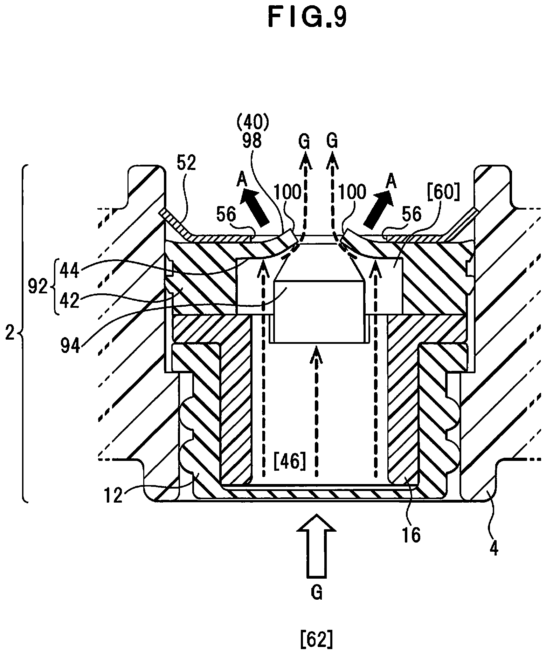

Fig. 9 illustrates the valve unit 8 and the pressure regulation function (discharge of the gas G when P > Pth).

The opening-sealing member 2 including the valve unit 8 is used for sealing the device case of the power storage device (not illustrated). The space portion 62 is filled with the gas G serving as gas containing a liquid such as the electrolytic solution, vapor, and the like discharged from the element, as illustrated in Fig. 9, for example. The gas G increases the pressure in the device case. The gas G having entered reaches the space portion 46 on a side of the cylindrical portion 16, and increases the pressure in the space portion 46.

<Valve Closure Function of Valve Unit 8>

When the gas G moves from the space portion 62 to the space portion 46, and when the pressure P in the space portion 46 due to the gas G is lower than the threshold Pth that is set for the valve body 11, the closing piece 98 is in close contact with the inclined surface portion 96 of the shaft portion 94, and then the valve unit 8 is in a valve closed state. That is, in Fig. 9, a state with neither a thick-line arrow nor broken-line arrows is maintained.

<Transition of Valve Unit 8 from Valve Closed State to Valve Opened State>

When the pressure P in the space portion 46 becomes equal to or higher than the threshold Pth that is set for the valve body 92, the closing piece 98 of the valve body 92 is deformed in directions indicated by arrows A from the inclined surface portion 96 of the shaft portion 94 by the pressure P applied to the closing portion 40, and then the valve unit 8 is in a valve opened state. That is, a gas passage is formed between the shaft portion 94 and the closing piece 98, and the gas G is discharged to the outside air through the opening portion 100 as indicated by the broken-line arrows. The discharge of the gas G continues until the pressure P in the space portions 46 and 60 decreases to be lower than the threshold Pth.

<Return of Valve Unit 8 from Valve Opened State to Valve Closed State>

When the pressure P in the space portion 46 decreases to be lower than the threshold Pth that is set for the valve body 92, the closing piece 98 of the valve body 92 returns to a side of the shaft portion 94 (directions opposite to those that the arrows A indicate) by a restoring force such as elasticity, and then the valve unit 8 is in a valve closed state. Therefore, the pressure P in the space portions 46 and 60 decreases to be lower than the threshold Pth, and the pressure P in the device case is pressure-regulated to be lower than the threshold Pth.

Note that it has been described, in the present embodiment, a case where the closing piece 98 and the inclined surface portion 96 are in contact with each other as the joint range 50 between the valve body 92 and the shaft portion 94. However, the present disclosure is not limited to the case. In the valve unit 8, it is also included a case where the closing piece 98 is in contact with an edge portion at an end portion of the inclined surface portion 96, for example. Furthermore, the joint range 50 of the valve unit 8 includes, for example, any of those contact states described below.

(1) Case where a surface portion of the closing piece 98 and the inclined surface portion 96 are in contact with each other

(2) Case where an edge portion at a part of the closing piece 98 and the inclined surface portion 96 are in contact with each other

(3) Case where the surface portion of the closing piece 98 and an edge portion of the shaft portion 94 are in contact with each other

(4) Case where the edge portion at the part of the closing piece 98 and the edge portion of the shaft portion 94 are in contact with each other

That is, a joint region between the valve body 92 and the shaft portion 94 is formed between a point and a point, between a point and a plane, or between a plane and a plane, for example.

A contact state of the joint range 50 between the closing piece 98 and the shaft portion 94 can be set by setting, for example, parameters such as the opening diameter $\varphi 7$ of the opening portion 100 of the valve body 92, the protrusion length H3 of the shaft portion 94, the depth D2 of the concave portion 44 of the valve body 92, the inclination width W3, and the inclination angle $\theta$.

<Effects of Second Embodiment>

According to the configuration described above, any one of those effects described below can be obtained.

(1) Effects similar to those of the first embodiment can be obtained.

(2) With the configuration in which the valve body 92 and the shaft portion 94 of the seal guide 90 are in contact with each other, it is possible to facilitate the assembly and manufacturing processing of the valve unit 8, the opening-sealing member, and the power storage device.

(3) By setting the protrusion length H3 of the shaft portion 94, the inclination width W3, the inclination angle $\theta$, and the depth D2 of the concave portion 44 of the valve body 92, setting of the operation pressure for the valve unit 8 can be facilitated.

(4) By bringing the closing piece 98 into contact with the inclined surface portion 96 of the shaft portion 94, the closing piece 98 can be prevented from being damaged and the like at the time of the opening and closing operation of the valve unit 8 or in the manufacturing process of the valve unit 8.

(5) By setting a contact state between the closing piece 98 and the shaft portion 94, an elastic force to be exerted in the closing piece 98 can be easily adjusted. By adjusting the elastic force in this manner, valve operation pressure can be set for the valve unit 8.

(6) By making it possible to control operation pressure for the valve by adjusting a contact state between the closing piece 98 and the shaft portion 94, it is possible to facilitate the processability of the valve unit 8 and improve the processing accuracy.

[Modifications]

Modifications of the embodiments and the examples described above will be listed below.

(1) In the valve body 11 illustrated in A of Fig. 4, the cylindrical portion 38 is formed to have a large diameter. However, instead of this configuration, a groove portion may be formed on an inner surface of the cylindrical portion 38.

(2) In Example 3, the concave-and-convex portion 84 including the plurality of annular convex portions is formed on a side of the opening portion 70 of the cylindrical portion 16 of the valve body 11. However, the opening portion 70 of the cylindrical portion 38 may be formed into a flat surface having an identical diameter, and a concave portion or a convex portion similar to the concave-and-convex portion 84 may be formed on a peripheral surface on a side of the shaft portion 18.

(3) In the second embodiment described above, a case where the inclined surface portion 96 that is brought into contact with the closing piece 98 has a planar shape has been described. However, the present disclosure is not limited to the case. The inclined surface portion 96 may be formed into a curved surface shape, for example. In addition, a concave-and-convex shape may be formed on a contact portion between the inclined surface portion 96 and the closing piece 98, and the concave-and-convex shape may be allowed to be in engagement at the time of contact, for example.

(4) In the second embodiment described above, a case where the inclined surface portion 96 is formed at a part on the tip side of the shaft portion 94, and a surface portion or an edge portion of the closing piece 98 is in contact with a flat portion or an edge portion at an end portion of the inclined surface portion 96 has been described. However, the present disclosure is not limited to the case. In the valve unit 8, for example, a part of the closing piece 98 may include an inclined surface portion having a predetermined angle, and a cylindrical shaft portion 94 that does not include an inclined surface portion may be provided. As a result, in the valve unit 8, the inclined surface portion of the closing piece 98 or the edge portion formed at the end portion of the inclined surface portion may be in contact with the peripheral surface on the tip side or the corner portion at the tip of the shaft portion 94 to elastically deform the closing piece 98.

A formation position of the inclined surface portion of the closing piece 98 may be set by assuming, for example, a formation angle and a position of contact with the shaft portion 94.

As described above, the most preferred embodiments and the like of the present disclosure have been described. The present disclosure is not limited to those described above. Various modifications and changes can be made by those skilled in the art based on the gist described in the claims or within the scope of the present disclosure. It goes without saying that such modifications and changes are included in the scope of the present disclosure.

Industrial Applicability

The valve structure, the opening-sealing member, the power storage device, and the manufacturing method therefor according to the present disclosure are useful in that, when the pressure P of the gas filled in the device case for a capacitor and the like rises to the threshold Pth or higher, the gas is automatically discharged, the internal pressure in the device case can be reduced to be lower than the threshold Pth, and the lives of the opening-sealing member and the device can be extended.

Reference Signs List

2 Opening-sealing member
4 Opening-sealing member main body
6 Opening portion
6-1 Small diameter portion
6-2 Large diameter portion
6-3 Step portion
6-4, 6-5 Vertical wall portion
8 Valve unit
10, 90 Seal guide
11, 92 First valve body
12 Second valve body
16, 30, 38 Cylindrical portion
18, 94 Shaft portion
18-1 Conical portion
18-2 Identical diameter portion
20 Support portion
22, 24 Opening portion
26, 42, 82 Flange portion
28 Large diameter portion
32 Gas-liquid separation portion
34 Flange portion
36 Annular convex portion
40 Closing portion
44 Concave portion
46 Space portion
48 Annular convex portion
50 Joint range
52 Clip plate
54 Main body portion
56 Through hole
58 Locking claw
60, 62 Space portion
70, 100 Opening portion
72 Small diameter portion

74, 80, 86 Passage
76 Groove portion
78 Annular portion
84 Concave-and-convex portion
96 Inclined surface portion
98 Closing piece

**Claims**

1. A valve structure comprising:

   a cylindrical body provided with a shaft portion; and
   a first valve body that is in close contact with the shaft portion to close an opening portion of the cylindrical body, and is separated from the shaft portion when pressure in the cylindrical body rises to a threshold or higher by gas that has entered the cylindrical body, to release the gas from the cylindrical body to outside.

2. The valve structure according to claim 1, wherein the first valve body includes a closing portion that receives the pressure of the gas in the cylindrical body, and the pressure received by the closing portion serves as a valve opening force for the first valve body.

3. The valve structure according to claim 1 or 2, wherein

   the first valve body includes a closing piece that is in contact with a peripheral surface of the shaft portion, is deformed by the pressure in the cylindrical body, and is separated from the shaft portion, and
   the closing piece is in a state where the closing piece is pressed by the shaft portion that is in contact with the closing piece.

4. The valve structure according to claim 3, wherein the closing piece is in contact with the shaft portion and elastically deformed in a gas discharge direction.

5. The valve structure according to claim 3 or 4, wherein

   an inclined surface portion is provided on either the peripheral surface, on a tip side, of the shaft portion or a part of the closing piece, and
   the closing piece and the shaft portion are in contact with the inclined surface portion or an edge portion at an end portion of the inclined surface portion.

6. The valve structure according to claim 5, wherein, between the first valve body and the shaft portion, one surface portion or its corner portion is in contact with either the inclined surface portion or the edge portion.

7. The valve structure according to any one of claims 3 to 6, wherein the threshold for the pressure at which the closing piece deforms is set by one value or both values of a protrusion length of the shaft portion from the opening portion and an inclination angle of the inclined surface portion.

8. The valve structure according to claim 2, wherein the first valve body includes a cylindrical portion that covers a part or a whole of the peripheral surface of the shaft portion together with the closing portion, and the closing portion and the cylindrical portion are separated from the shaft portion depending on a state of the pressure in the cylindrical body to release the gas to outside.

9. The valve structure according to any one of claims 1, 2, and 8, further comprising a ventilation portion that allows the gas to flow, on either or both of the shaft portion and the first valve body in at least a joint range between the shaft portion and the first valve body.

10. The valve structure according to any one of claims 1, 2, 8, and 9, wherein either or both of the shaft portion and the first valve body include a concave portion or a convex portion in at least a joint range between the shaft portion and the first valve body.

**11.** The valve structure according to any one of claims 1 to 10, further comprising a second valve body including a gas-liquid separation portion on the cylindrical body, the gas-liquid separation portion being configured to separate moisture from the gas.

**12.** An opening-sealing member configured to close an outer case of a power storage device, the opening-sealing member comprising:

a cylindrical body installed in an opening portion of the opening-sealing member and provided with a shaft portion; and

a first valve body that is in close contact with the shaft portion to close an opening portion of the cylindrical body, and is separated from the shaft portion when pressure in the cylindrical body rises to a threshold or higher by gas that has entered the cylindrical body, to release the gas from the cylindrical body to outside.

**13.** A power storage device comprising the valve structure according to claim 1, 2, 3, 4, 5, 6, 7, 8, 9, 10, or 11, the opening-sealing member according to claim 12.

**14.** An opening-sealing member manufacturing method comprising:

forming an opening portion in an opening-sealing member;

forming a cylindrical body provided with a shaft portion;

installing, on the cylindrical body, a first valve body that is in close contact with the shaft portion to close an opening portion of the cylindrical body; and

fixing the cylindrical body and the first valve body between a step portion in the opening portion of the opening-sealing member and an elastic fixing member fixed to the opening portion.

**15.** A power storage device manufacturing method comprising:

forming an opening-sealing member including an opening portion;

forming a cylindrical body provided with a shaft portion;

installing, on the cylindrical body, a first valve body that is in close contact with the shaft portion to close an opening portion of the cylindrical body; and

fixing the cylindrical body and the first valve body between a step portion in the opening portion of the opening-sealing member and an elastic fixing member fixed to the opening portion.

# FIG.1

# FIG.2

# FIG.3

# F I G.4

A
[VALVE BODY 11]

B
[SEAL GUIDE 10]

C
[SEAL GUIDE 10 AND]
[VALVE BODY 11  ]

# FIG.5

**A**
[SEAL GUIDE 10]

**B**
⌈SEAL GUIDE 10 AND⌉
⌊VALVE BODY 11 ⌋

**C**
⌈SEAL GUIDE 10 AND⌉
⌊VALVE BODY 11 ⌋

# FIG.6

A
[VALVE BODY 11]

84

38

11

42

70

B
[SEAL GUIDE 10 AND
VALVE BODY 11]

18

50    84    50

38                86

11                42

26              28

16

10

# FIG.7

# FIG.8

# FIG.9

## INTERNATIONAL SEARCH REPORT

| International application No. |
| --- |
| **PCT/JP2022/007622** |

### A. CLASSIFICATION OF SUBJECT MATTER

*H01G 9/12*(2006.01)i; *H01G 2/10*(2006.01)i; *H01M 50/147*(2021.01)i; *H01M 50/342*(2021.01)i
FI:    H01G9/12 C; H01G2/10 301; H01M50/147; H01M50/342

According to International Patent Classification (IPC) or to both national classification and IPC

### B. FIELDS SEARCHED

Minimum documentation searched (classification system followed by classification symbols)

H01G9/12; H01G2/10; H01M50/147; H01M50/342

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2013-258063 A (KOMATSU LTD.) 26 December 2013 (2013-12-26) paragraphs [0017]-[0055], fig. 1-12 | 1-3, 7-8, 11-13 |
| A | | 5-6 |
| X | JP 2005-183754 A (NOK CORP.) 07 July 2005 (2005-07-07) paragraphs [0014]-[0045], fig. 1-3 | 1-4, 7-15 |
| A | | 5-6 |
| A | JP 2011-222137 A (TOSHIBA SHOMEI PRECISION KK) 04 November 2011 (2011-11-04) paragraphs [0014]-[0048], fig. 1-4 | 1-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 April 2022** | **17 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/007622**

| Patent document cited in search report | | | Publication date (day/month/year) | Patent family member(s) | Publication date (day/month/year) |
|---|---|---|---|---|---|
| JP | 2013-258063 | A | 26 December 2013 | (Family: none) | |
| JP | 2005-183754 | A | 07 July 2005 | (Family: none) | |
| JP | 2011-222137 | A | 04 November 2011 | (Family: none) | |

Form PCT/ISA/210 (patent family annex) (January 2015)

**EP 4 300 523 A1**

**REFERENCES CITED IN THE DESCRIPTION**

**Patent documents cited in the description**

- WO 2003044397 A
- JP 2010056507 A
- JP 2005123423 A
- JP 62058035 U